# FASCICULE DE BREVET EUROPEEN

(11) **EP 4 240 959 B1**
(45) Date de publication et mention de la délivrance du brevet: **07.01.2026**
(21) Numéro de dépôt: 21815243.7
(22) Date de dépôt: 05.11.2021
(51) Int. Cl.: F02K 1/12

(54) **PARTIE ARRIÈRE DE TURBORÉACTEUR COMPRENANT UNE TUYÈRE DONT DES VOLETS COMPRENNENT DES LEVIERS DÉPLAÇABLES PAR DES PAROIS D'APPUI AMONT ET AVAL**
HECKTEIL EINES STRAHLTRIEBWERKS MIT EINER DÜSE MIT KLAPPEN MIT ÜBER VOR- UND NACHGESCHALTETE LAGERWÄNDE BEWEGLICHEN HEBELN
JET ENGINE REAR PART COMPRISING A NOZZLE HAVING FLAPS COMPRISING LEVERS THAT ARE MOVABLE BY MEANS OF UPSTREAM AND DOWNSTREAM BEARING WALLS

(30) Priorité: 09.11.2020 FR 2011435
(43) Date de publication de la demande: 13.09.2023
(73) Titulaire: SAFRAN AIRCRAFT ENGINES, 75015 Paris (FR)
(72) Inventeur: KOHN, Thierry, 77550 MOISSY-CRAMAYEL (FR); EICHSTADT, Frédéric, Paul, 77550 MOISSY-CRAMAYEL (FR); FREMONT, Elric, Georges, André, 77550 MOISSY-CRAMAYEL (FR)
(74) Mandataire: Santarelli
(86) Numéro de dépôt international: PCT/FR2021/051957
(87) Numéro de publication internationale: WO 2022/096837

(56) Documents cités:
- FR-A1- 2 180 440
- FR-A1- 2 714 421

## Description

### DOMAINE TECHNIQUE

La présente invention se rapporte au domaine des tuyères à géométrie variable des turboréacteurs destinés à la propulsion des aéronefs.

### ÉTAT DE LA TECHNIQUE ANTÉRIEURE

Les turboréacteurs destinés au vol supersonique comprennent en général un canal de postcombustion dont la sortie est délimitée par une tuyère axisymétrique à géométrie variable, c'est-à-dire capable d'adapter sa géométrie aux différentes vitesses auxquelles est susceptible de voler un tel aéronef.

À cet effet, une telle tuyère comprend au moins un ensemble de volets internes mobiles, dits volets convergents, répartis autour de l'axe longitudinal du turboréacteur et ayant chacun une extrémité amont articulée sur une structure interne du carter, chacun des volets convergents comprenant un panneau destiné à canaliser le flux d'air d'échappement au sein de la tuyère. Une telle tuyère comprend en outre un système de commande des volets convergents apte à entraîner un pivotement de ces derniers autour de leurs axes d'articulation au carter de manière synchronisée.

Bien souvent, les tuyères destinées au vol supersonique comprennent en outre un autre ensemble de volets internes mobiles, dits volets divergents, répartis autour de l'axe longitudinal, comprenant chacun un panneau destiné à canaliser le flux d'air d'échappement au sein de la tuyère, et ayant des extrémités amont respectives articulées sur des extrémités aval des volets convergents, moyennant quoi une telle tuyère est appelée tuyère convergente-divergente. Dans ce cas, le système de commande est en outre configuré pour asservir les positions des volets divergents à celles des volets convergents. Un tel système permet ainsi de faire varier de façon continue les inclinaisons respectives des volets convergents par rapport à l'axe longitudinal du turboréacteur, et d'y faire correspondre des inclinaisons des volets divergents, par rapport à cet axe, suivant une loi univoque déterminée. Une telle tuyère permet ainsi notamment de faire varier la position et la forme du col de la tuyère.

Il est à noter que le qualificatif « divergent » n'exclut pas que les volets concernés puissent adopter des orientations parallèles à l'axe longitudinal ou même convergentes dans certaines phases de fonctionnement. De même, notamment dans le cas de tuyères ne comportant pas de volets divergents, il est possible que les volets convergents adoptent des orientations parallèles à l'axe longitudinal ou même divergentes dans certaines phases de fonctionnement.

Dans ce contexte, il existe un besoin pour une tuyère à géométrie variable dont le système de commande des volets internes mobiles soit efficace et peu encombrant dans la direction radiale afin de permettre son intégration dans un espace limité.

Les documents FR2714421 A1 et FR2180440 A1 décrivent des tuyères à géométrie variable de l'art antérieur.

### EXPOSÉ DE L'INVENTION

L'invention a notamment pour but de répondre de manière simple, économique et efficace à ce besoin.

Elle propose à cet effet une partie arrière de turboréacteur, comprenant :
- une structure statorique amont ;
- une tuyère à géométrie variable comprenant un ensemble de volets convergents répartis autour d'un axe longitudinal de la partie arrière de turboréacteur, comprenant chacun un panneau destiné à canaliser un flux d'air d'échappement au sein de la tuyère, et ayant chacun une extrémité amont articulée sur la structure statorique amont selon un premier axe d'articulation correspondant ; dans laquelle certains au moins des volets convergents, dits volets convergents commandés, comprennent chacun un levier rigidement solidaire du panneau correspondant et s'étendant dans une direction d'éloignement de l'axe longitudinal, ledit levier portant un galet d'appui monté libre en rotation sur le levier selon un axe parallèle au premier axe d'articulation correspondant ; et
- des moyens moteurs comprenant une partie mobile déplaçable axialement sur commande par rapport à la structure statorique amont.

Le galet d'appui du levier d'au moins l'un des volets convergents commandés est disposé axialement entre une paroi d'appui amont et une paroi d'appui aval qui sont rigidement solidaires de la partie mobile des moyens moteurs, de sorte que le galet d'appui du levier soit libre de se mouvoir par rapport aux parois d'appui amont et aval au moins selon une direction radiale par rapport à l'axe longitudinal.

Ainsi, lors d'un déplacement vers l'aval de la partie mobile des moyens moteurs, la paroi d'appui amont pousse le levier vers l'aval et provoque ainsi un pivotement du volet convergent selon le premier axe d'articulation correspondant, conduisant à rapprocher de l'axe longitudinal une extrémité aval du volet convergent.

De plus, lors d'un déplacement vers l'amont de la partie mobile des moyens moteurs, au moins si le turboréacteur est à l'arrêt, la paroi d'appui aval pousse le levier vers l'amont et provoque ainsi un pivotement du volet convergent selon le premier axe d'articulation correspondant, conduisant à éloigner de l'axe longitudinal l'extrémité aval du volet convergent.

De ce fait, les moyens moteurs peuvent être exploités d'une manière optimale lors d'une manœuvre d'accroissement de la convergence des volets convergents de la tuyère. De plus, les moyens mis en œuvre pour la commande des volets, peuvent ainsi présenter un encombrement et une masse limités au mieux.

Dans des modes de réalisation de l'invention, l'une des parois d'appui amont et aval est reliée à la partie mobile des moyens moteurs par l'intermédiaire de l'autre des parois d'appui amont et aval.

Dans des modes de réalisation de l'invention, une paroi externe de liaison relie entre elles des extrémités radialement externes respectives des parois d'appui amont et aval.

Dans des modes de réalisation de l'invention, la paroi d'appui amont disposée en regard du galet d'appui de chaque levier est espacée circonférentiellement de parois d'appui amont disposées en regard des galets d'appui des deux leviers les plus proches, et la paroi d'appui aval disposée en regard du galet d'appui de chaque levier est espacée circonférentiellement de parois d'appui aval disposées en regard du galet d'appui des deux leviers les plus proches, moyennant quoi les parois d'appui amont et aval forment une rangée annulaire de dispositifs d'appui comprenant chacun l'une des parois d'appui amont et l'une des parois d'appui aval.

Dans des modes de réalisation de l'invention, la partie arrière de turboréacteur comprend un anneau de synchronisation entourant l'ensemble de volets convergents ou la structure statorique amont, et par lequel chacun des dispositifs d'appui est relié à la partie mobile des moyens moteurs.

Dans des modes de réalisation de l'invention, pour chaque dispositif d'appui, une première paroi latérale de liaison relie entre elles des premières extrémités circonférentielles respectives des parois d'appui amont et aval, et une seconde paroi latérale de liaison relie entre elles des secondes extrémités circonférentielles respectives des parois d'appui amont et aval, opposées aux premières extrémités circonférentielles.

Dans des modes de réalisation de l'invention, la tuyère à géométrie variable comprend en outre un ensemble de volets divergents répartis autour de l'axe longitudinal, comprenant des panneaux destinés à canaliser le flux d'air d'échappement au sein de la tuyère, et ayant des extrémités amont articulées sur des extrémités aval des volets convergents, moyennant quoi la tuyère est une tuyère convergente-divergente.

L'invention concerne également un turboréacteur pour aéronef, comprenant une partie arrière du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique en section axiale d'un turboréacteur comprenant une tuyère à géométrie variable ;
- la figure 2 est une demi-vue schématique en section axiale d'une partie arrière de turboréacteur d'un type connu ;
- la figure 3 est une demi-vue schématique en section axiale d'une partie arrière du turboréacteur de la figure 1, selon un mode de réalisation de l'invention ;
- la figure 4 est une vue schématique en perspective de certains éléments composant la partie arrière du turboréacteur de la figure 1 ;
- les figures 5 et 6 sont des vues schématiques en perspective à plus grande échelle d'une partie des éléments visibles sur la figure 4.

Dans l'ensemble de ces figures, des références identiques peuvent désigner des éléments identiques ou analogues.

### EXPOSÉ DÉTAILLÉ DE MODES DE RÉALISATION PRÉFÉRÉS

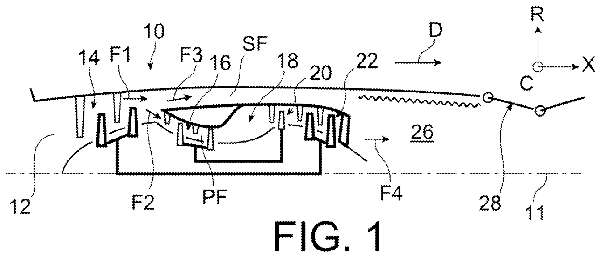

La figure 1 illustre un turboréacteur 10, par exemple à double corps et à double flux, destiné à la propulsion d'un aéronef apte au vol supersonique, et donc destiné en particulier à être installé dans le fuselage d'un tel aéronef. L'invention est bien entendu applicable à d'autres types de turboréacteurs.

Dans l'ensemble de cette description, la direction axiale X est la direction de l'axe longitudinal 11 du turboréacteur. Sauf lorsqu'il en est stipulé autrement, la direction radiale R est en tout point une direction orthogonale à l'axe longitudinal 11 et passant par ce dernier, et la direction circonférentielle C est en tout point une direction orthogonale à la direction radiale R et à l'axe longitudinal 11. Sauf lorsqu'il en est stipulé autrement, les termes « interne » et « externe » font respectivement référence à une relative proximité, et un relatif éloignement, d'un élément par rapport à l'axe longitudinal 11. Enfin, les qualificatifs « amont » et « aval » sont définis par référence à une direction générale D de l'écoulement des gaz dans le turboréacteur 10.

À titre illustratif, un tel turboréacteur 10 comprend, de l'amont vers l'aval, une entrée d'air 12, un compresseur basse pression 14, un compresseur haute pression 16, une chambre de combustion 18, une turbine haute pression 20, une turbine basse pression 22, un canal de postcombustion 26, et une tuyère 28 à géométrie variable, par exemple de type convergente-divergente. Ces organes du turboréacteur sont tous centrés selon l'axe longitudinal 11 du turboréacteur.

De manière bien connue, le compresseur haute pression 16, la chambre de combustion 18, et les turbines haute pression 20 et basse pression 22, définissent une veine primaire PF. Cette dernière est entourée par une veine secondaire SF de la turbomachine qui s'étend de l'amont vers l'aval à partir d'une sortie du compresseur basse pression. Ainsi, en fonctionnement, de l'air F1 qui est entré par l'entrée d'air 12 et qui a été comprimé par le compresseur basse pression 14, se divise ensuite en un flux primaire F2 qui circule dans la veine primaire et en un flux secondaire F3 qui circule dans la veine secondaire. Le flux primaire F2 est alors comprimé davantage dans le compresseur haute pression 16, puis mélangé à du carburant et enflammé dans la chambre de combustion 18, avant de subir une détente dans la turbine haute pression 20 puis dans la turbine basse pression 22.

Le flux de gaz d'échappement F4, constitué par le mélange des gaz de combustion, issus de la veine primaire, et du flux secondaire F3, circule ensuite dans le canal de postcombustion 26, puis s'échappe du turboréacteur 10 au travers de la tuyère 28.

En régime de fonctionnement avec postcombustion, par exemple pour propulser un aéronef à des vitesses supersoniques, du carburant est mélangé au flux de gaz d'échappement F4 au sein du canal de postcombustion 26, et le mélange ainsi constitué est enflammé au sein de ce canal de postcombustion, afin de générer un surcroît de poussée.

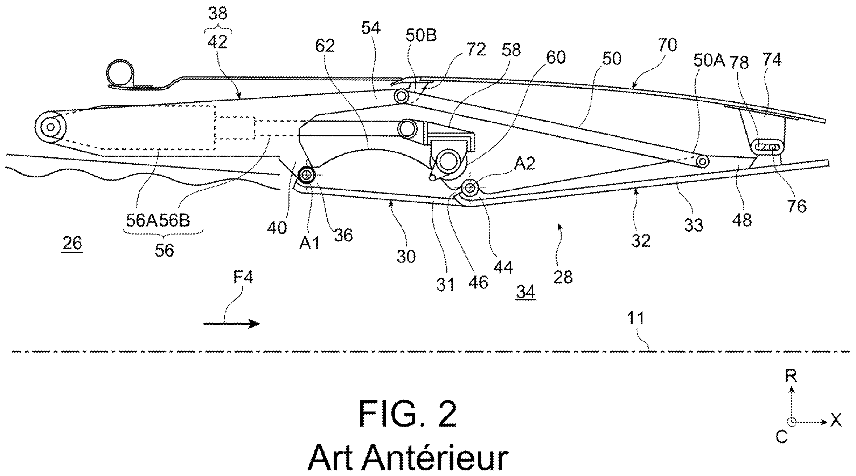

La figure 2 illustre à plus grande échelle une partie arrière de turboréacteur dans une configuration connue de l'art antérieur, et permet notamment d'apercevoir des volets internes mobiles de la tuyère.

Les volets internes mobiles se composent, en amont, d'un ensemble de volets convergents 30 répartis autour de l'axe longitudinal 11, et, en aval, d'un ensemble de volets divergents 32 répartis aussi autour de l'axe longitudinal 11.

Ces volets internes mobiles comportent chacun un panneau 31, 33 contribuant à délimiter extérieurement un canal de circulation de gaz d'échappement 34 défini dans le prolongement du canal de postcombustion 26. Les volets internes mobiles 30, 32 permettent ainsi de canaliser le flux de gaz d'échappement F4 en sortie du turboréacteur 10, en fonctionnement.

Les volets convergents 30 sont articulés à leurs extrémités amont 36 sur une structure statorique 38 de la partie arrière de turboréacteur, en l'occurrence sur des chapes internes 40 de poutrelles 42 appartenant à ladite structure statorique, de sorte que les volets convergents 30 soient déplaçables en rotation autour de premiers axes d'articulation A1 assujettis à la structure statorique 38.

Les volets divergents 32 sont articulés, à leurs extrémités amont 44, sur des extrémités aval 46 des volets convergents 30, de sorte que les volets divergents 32 soient déplaçables en rotation autour de deuxièmes axes d'articulation A2 assujettis aux volets convergents 30. Les volets divergents 32 sont en outre articulés, à leurs extrémités aval 48, sur des premières extrémités 50A de bielles 50 ayant des secondes extrémités 50B opposées articulées sur la structure statorique 38, en l'occurrence sur des chapes externes 54 des poutrelles 42.

Un système de commande des volets internes mobiles comporte des moyens moteurs configurés pour agir sur certains au moins des volets convergents, qui seront dénommés volets convergents commandés dans ce qui suit. Dans le cas où d'autres volets convergents ne sont soumis à l'action des moyens moteurs que par l'intermédiaire des volets convergents commandés, ces autres volets convergents sont dénommés volets convergents suiveurs, d'une manière bien connue.

Les moyens moteurs sont typiquement constitués de vérins 56 ayant chacun une partie statique, par exemple leur corps 56A, fixée à la structure statorique 38, et une partie mobile, par exemple leur tige 56B, solidaire d'un porte-galet 58 correspondant, sur lequel est monté un galet 60 en appui roulant sur une came 62 formée par une structure 64 solidaire du panneau 31 d'un volet convergent 30 correspondant, le porte-galet 58 étant en outre solidaire d'un doigt de retenue 66 coopérant avec la structure 64 pour retenir radialement le volet convergent 30 et éviter en particulier que le volet ne s'abaisse sous l'effet de la gravité lorsque le turboréacteur est à l'arrêt. L'ensemble des volets internes mobiles 30 et 32 forme ainsi, avec la structure statorique 38, un système isostatique.

Un déplacement en translation de la partie mobile de chaque vérin 56 permet ainsi de provoquer un déplacement des volets convergents 30 en rotation autour des premiers axes d'articulation A1, qui s'accompagne d'un déplacement des volets divergents 32 en rotation autour des deuxièmes axes d'articulation A2. De tels déplacements des volets internes mobiles 30, 32 conduisent à modifier le profil de la tuyère et notamment la section du col de celle-ci au niveau de la jonction entre les volets convergents et les volets divergents.

La tuyère comporte en outre des volets externes mobiles 70 ayant des extrémités amont 72 articulées sur la structure statorique 38, par exemple sur les chapes externes 54 des poutrelles 42, et des extrémités aval 74 assujetties aux extrémités aval 48 des volets divergents 32, par exemple au moyen de dispositifs de liaison à galet 76 et glissière 78.

La configuration à géométrie variable de la tuyère 28 permet d'adapter cette dernière aux différentes phases de vol. Ainsi, en régime subsonique, les volets internes convergents sont par exemple maintenus dans une configuration faiblement convergente, tandis qu'en régime supersonique, les volets internes convergents adoptent une configuration davantage convergente.

Un inconvénient des systèmes de commande du type décrit ci-dessus est que les vérins 56 travaillent dans le sens de la rétraction de leur tige 56B, qui est le sens de travail le moins efficace, lors d'une manœuvre d'accroissement de la convergence des volets convergents, alors que ce type de manœuvre est celle qui requiert les efforts les plus importants.

D'autres systèmes de commande connus ne comportent pas de galet ni de came mais une chaîne d'éléments articulés les aux autres. Dans ces systèmes, la partie des vérins liée à la structure statorique est articulée à cette dernière autour d'axes ortho-radiaux (c'est-à-dire tangentiels). De ce fait, un inconvénient de tels systèmes de commande réside dans l'encombrement relativement important de ces systèmes dans la direction radiale.

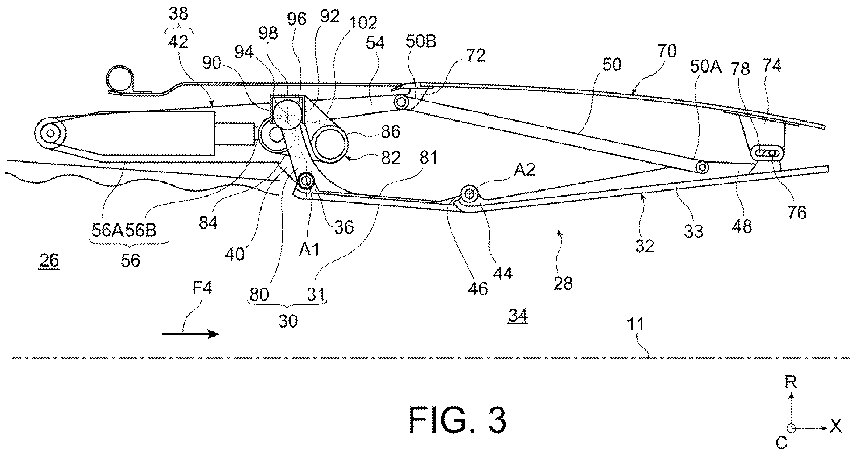

La partie arrière du turboréacteur de la figure 1, selon un mode de réalisation de l'invention, va maintenant être décrite plus en détail en référence aux figures 3 à 6.

Les volets convergents 30 commandés comprennent chacun un levier 80 solidaire du panneau 31 du volet. Un tel levier 80 s'étend bien entendu dans une direction d'éloignement de l'axe longitudinal 11, à partir du panneau 31 ou, dans l'exemple illustré, à partir d'une structure de rigidification 81 agencée sur la face externe du panneau 31 et solidaire de ce dernier.

De manière analogue à ce qui est décrit ci-dessus, la partie arrière de turboréacteur comprend des moyens moteurs comprenant une partie mobile déplaçable axialement sur commande par rapport à la structure statorique amont 38. À titre illustratif, les moyens moteurs sont, ici encore, constitués de vérins 56, et l'ensemble des tiges 56B des vérins constituent ladite partie mobile.

Afin de permettre que la partie mobile des moyens moteurs agisse sur le levier 80 d'au moins l'un des volets convergents 30 commandés, ledit levier 80 est disposé axialement entre une paroi d'appui amont 90 et une paroi d'appui aval 92, qui sont rigidement solidaires de la partie mobile des moyens moteurs, de sorte que le levier 80 soit libre de se mouvoir par rapport aux parois d'appui amont 90 et aval 92 au moins selon la direction radiale R par rapport à l'axe longitudinal 11.

De cette manière, lors d'un déplacement vers l'aval de la partie mobile des moyens moteurs (constituée des tiges 56B), la paroi d'appui amont 90 pousse le levier 80 vers l'aval et provoque ainsi un pivotement du volet convergent 30 selon le premier axe d'articulation A1 correspondant, conduisant à rapprocher de l'axe longitudinal 11 l'extrémité aval 46 du volet.

Inversement, lors d'un déplacement vers l'amont de la partie mobile des moyens moteurs, au moins si le turboréacteur est à l'arrêt, la paroi d'appui aval 92 pousse le levier 80 vers l'amont et provoque ainsi un pivotement du volet convergent 30 selon le premier axe d'articulation A1 correspondant, conduisant à éloigner de l'axe longitudinal 11 l'extrémité aval 46 du volet. Si le turboréacteur est en fonctionnement, il est possible que la poussée des gaz sur le volet convergent 30 suffise à provoquer le pivotement de ce dernier avant-même que la paroi d'appui aval 92 ne rentre en contact avec le levier 80. De ce fait, il est avantageusement prévu que la paroi d'appui amont 90 présente une rigidité accrue par comparaison avec la paroi d'appui aval 92. À cet effet, la paroi d'appui amont 90 peut être plus épaisse que la paroi d'appui aval 92, ou la paroi d'appui amont 90 peut présenter des nervures de rigidification la paroi d'appui aval 92 peut être dépourvue de telles nervures de rigidification.

Le levier 80 est pourvu d'un galet d'appui 96 de forme cylindrique de révolution, monté libre en rotation sur le levier 80 selon un axe 94 parallèle au premier axe d'articulation A1 correspondant, agencé entre les parois d'appui amont 90 et aval 92, de sorte que tout contact de l'une quelconque des parois d'appui amont 90 et aval 92 sur le levier 80 soit un contact cylindre/plan.

Ainsi, lors d'une manœuvre de pivotement du volet convergent sous l'effet d'un effort de poussée appliqué au galet d'appui 96 par l'une des parois d'appui amont 90 et aval 92, le déplacement radial du galet d'appui 96 par rapport à la paroi d'appui concernée s'effectue moyennant un roulement du galet d'appui 96 sur ladite paroi d'appui.

L'espacement axial entre les parois d'appui amont 90 et aval 92 est supérieur au diamètre du galet d'appui 96, de sorte qu'un jeu axial existe en permanence entre le galet d'appui 96 et la paroi d'appui opposée à la paroi d'appui exerçant la poussée sur le galet d'appui 96.

Le galet d'appui 96 est avantageusement agencé à une extrémité libre du levier 80, de manière à maximiser le bras de levier exercé par les parois d'appui amont 90 et aval 92 sur le volet convergent 30 concerné.

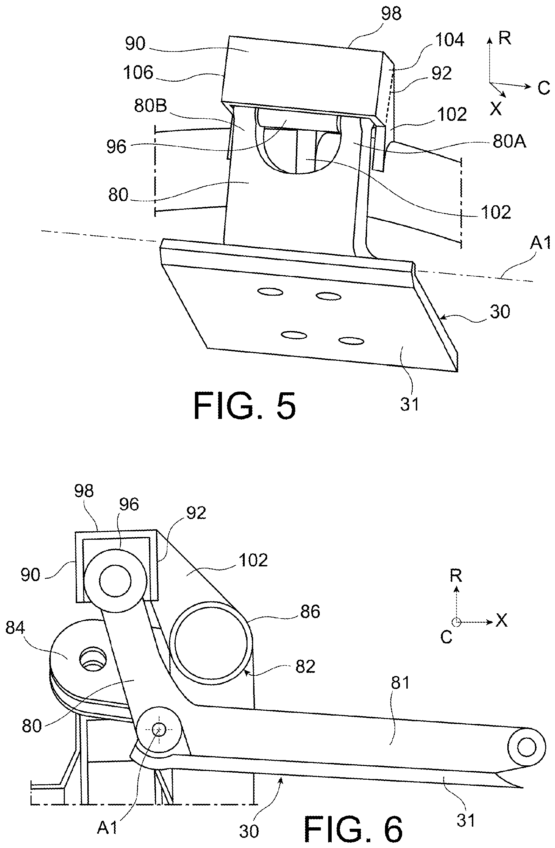

Ainsi, le galet d'appui 96 est par exemple monté sur un axe porté par deux bras latéraux 80A, 80B formant une fourche terminale du levier 80 (figure 5).

Par ailleurs, l'une des parois d'appui, en l'occurrence la paroi d'appui aval 92, est reliée à la partie mobile des moyens moteurs par l'intermédiaire de l'autre des parois d'appui, en l'occurrence la paroi d'appui amont 90.

À cet effet, une paroi externe de liaison 98 relie entre elles des extrémités radialement externes respectives des parois d'appui amont 90 et aval 92 (figures 3 à 6).

La description qui précède, concernant la manœuvre du levier de l'un des volets convergents commandés, est de préférence également valable pour les autres volets convergents commandés.

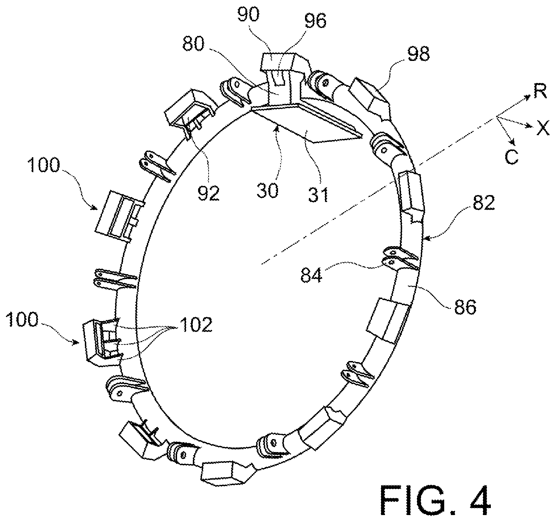

Ainsi, dans le mode de réalisation illustré, la paroi d'appui amont 90 disposée en regard de chaque levier 80 est espacée circonférentiellement de parois d'appui amont 90 disposées en regard des deux leviers 80 les plus proches du levier considéré, et la paroi d'appui aval 92 disposée en regard de chaque levier 80 est espacée circonférentiellement des parois d'appui aval 92 disposées en regard des deux leviers 80 les plus proches du levier considéré (figure 4). Les parois d'appui amont 90 et aval 92 forment ainsi une rangée annulaire de dispositifs d'appui 100 espacés les uns des autres, chaque dispositif d'appui 100 comprenant une paire correspondante de parois d'appui comprenant l'une des parois d'appui amont 90 et l'une des parois d'appui aval 92.

La partie arrière de turboréacteur illustrée comprend en outre un anneau de synchronisation 82 agencé autour de l'ensemble des volets convergents 30 ou, en variante, agencé un peu plus en amont autour de la structure statorique amont 38, et par lequel chacun des dispositifs d'appui 100 est relié à la partie mobile des moyens moteurs, c'est-à-dire à l'ensemble des tiges 56B des vérins 56.

En particulier, la partie mobile des moyens moteurs est reliée à l'anneau de synchronisation 82 de manière à pouvoir déplacer ce dernier en translation selon l'axe longitudinal 11. À cet effet, les tiges 56B des vérins 56 sont articulées à des premières chapes 84 de l'anneau de synchronisation 82. De telles premières chapes 84 sont formées en saillie à partir d'un corps principal 86, par exemple de forme torique, de l'anneau de synchronisation 82. Les premières chapes 84 s'étendent par exemple vers l'amont à partir du corps principal 86.

Il est à noter que le corps principal 86 de l'anneau de synchronisation peut présenter une forme plus complexe, comportant par exemple une alternance de parties en saillie radialement vers l'intérieur et de parties en saillie radialement vers l'extérieur et/ou une alternance de parties en saillie vers l'amont et de parties en saillie vers l'aval. Dans tous les cas, le corps principal 86 de l'anneau de synchronisation s'étend tout autour de l'axe longitudinal 11 du turboréacteur et présente ainsi une forme globalement annulaire.

Chacun des dispositifs d'appui 100 est relié à l'anneau de synchronisation 82, par exemple au moyen de trois bras 102 espacés circonférentiellement les uns des autres et raccordant chacun l'anneau de synchronisation 82 à la paroi d'appui aval 92 (figure 4).

En variante, la commande des volets convergents 30 peut être assurée directement par la partie mobile des moyens moteurs, par exemple par les tiges 56B des vérins, sans utiliser d'anneau de synchronisation.

Dans l'exemple illustré, au sein de chaque dispositif d'appui 100, dont l'un est visible sur la figure 5, une première paroi latérale de liaison 104 relie entre elles des premières extrémités circonférentielles respectives des parois d'appui amont 90 et aval 92, et une seconde paroi latérale de liaison 106 relie entre elles des secondes extrémités circonférentielles respectives des parois d'appui amont 90 et aval 92, opposées aux premières extrémités circonférentielles. Les première et seconde parois latérales de liaison 104, 106 permettent ainsi de relier la paroi d'appui amont 90 à la paroi d'appui aval 92 et donc à l'anneau de synchronisation 82, et par l'intermédiaire de ce dernier, à la partie mobile des moyens moteurs.

Dans tel cas, la paroi externe de liaison 98 peut bien entendu être omise.

En fonctionnement, un déploiement de la tige 56B de chaque vérin 56, ou plus généralement un déploiement vers l'aval de la partie mobile des moyens moteurs, provoque un déplacement vers l'aval de l'anneau de synchronisation 82, qui entraîne vers l'aval chaque paroi d'appui amont 90 et aval 92. Chaque paroi d'appui amont 90 est ainsi amenée au contact du galet d'appui 96 du levier 80 correspondant. Chaque paroi d'appui amont 90 pousse alors le galet d'appui 96, et donc le levier 80, vers l'aval, et provoque le pivotement du volet correspondant en direction de l'axe longitudinal 11, ce qui accroît la convergence des volets convergents 30. Le galet d'appui 96 roule sur la paroi d'appui amont 90 au cours du pivotement du volet, un tel roulement étant permis du fait du jeu existant entre le galet 96 et l'autre paroi d'appui, en l'occurrence la paroi d'appui aval 92.

À l'inverse, une rétraction de la tige 56B de chaque vérin 56, ou plus généralement une rétraction vers l'amont de la partie mobile des moyens moteurs, provoque un déplacement vers l'amont de l'anneau de synchronisation 82, qui entraîne vers l'amont chaque paroi d'appui amont 90 et aval 92. Si le turboréacteur est à l'arrêt, chaque paroi d'appui aval 92 est ainsi amenée au contact du galet d'appui 96 du levier 80 correspondant. Chaque paroi d'appui aval 92 pousse alors le galet d'appui 96, et donc le levier 80, vers l'amont, et provoque le pivotement du volet correspondant en direction opposée à l'axe longitudinal 11, ce qui réduit la convergence des volets convergents 30. Le galet d'appui 96 roule sur la paroi d'appui aval 92 au cours du pivotement du volet, un tel roulement étant là encore permis du fait du jeu existant entre le galet 96 et l'autre paroi d'appui, en l'occurrence la paroi d'appui amont 90. En revanche, si le turboréacteur est en fonctionnement, il est possible que la poussée des gaz sur le volet convergent 30 suffise à provoquer le pivotement de ce dernier avant-même que la paroi d'appui aval 92 ne rentre en contact avec le levier 80.

Les vérins 56 travaillent ainsi dans le sens du déploiement de leur tige 56B lors d'une manœuvre d'accroissement de la convergence des volets convergents, ce qui est avantageux du point de vue mécanique. En effet, au moins dans le cas préférentiel dans lequel les vérins 56 sont des vérins hydrauliques, le déploiement de la tige d'un tel vérin résulte d'une pression hydraulique exercée sur la totalité de la surface du piston du vérin, tandis que la rétraction de la tige résulte d'une pression hydraulique exercée sur la surface du piston diminuée de la section de la tige. Pour cette raison au moins, le déploiement de la tige offre en général une puissance accrue par rapport à la rétraction de la tige.

De plus, l'ensemble des éléments participant à la commande des volets internes, constitué des leviers 80, des parois d'appui amont 90 et aval 92, et des moyens reliant ces dernières à la partie mobile des moyens moteurs, peut ainsi présenter un encombrement et une masse limités.

Par ailleurs, le levier 80 de chacun des volets convergents 30 commandés est avantageusement agencé à une extrémité amont 30A du volet, de manière là encore à limiter au mieux l'encombrement et la masse du système de commande des volets.

Dans un tel cas, il est avantageux que l'anneau de synchronisation 82 soit disposé en aval du levier 80 de chacun des volets convergents 30 commandés.

Il est à noter que les corps 56A des vérins 56 peuvent être fixés rigidement sur la structure statorique 38, de la même manière que dans l'exemple connu illustré sur la figure 2 et décrit ci-dessus.

Dans des modes de réalisation alternatifs, les parois d'appui amont 90 peuvent être reliées les unes aux autres de manière à constituer une structure d'appui amont unitaire s'étendant sur 360 degrés. De manière analogue, les parois d'appui aval 92 peuvent être reliées les unes aux autres de manière à constituer une structure d'appui aval unitaire s'étendant sur 360 degrés.

De telles structures d'appui peuvent être directement intégrées au corps 86 de l'anneau de synchronisation 82.

## Revendications

1. Partie arrière de turboréacteur, comprenant :
- une structure statorique amont (38) ;
- une tuyère à géométrie variable (28) comprenant un ensemble de volets convergents (30) répartis autour d'un axe longitudinal (11) de la partie arrière de turboréacteur, comprenant chacun un panneau (31) destiné à canaliser un flux de gaz d'échappement (F4) au sein de la tuyère, et ayant chacun une extrémité amont (36) articulée sur la structure statorique amont selon un premier axe d'articulation (A1) correspondant ; dans laquelle certains au moins des volets convergents (30), dits volets convergents commandés, comprennent chacun un levier (80) rigidement solidaire du panneau (31) correspondant et s'étendant dans une direction d'éloignement de l'axe longitudinal (11), ledit levier (80) portant un galet d'appui (96) monté libre en rotation sur le levier selon un axe (94) parallèle au premier axe d'articulation (A1) correspondant ;
- des moyens moteurs comprenant une partie mobile déplaçable axialement sur commande par rapport à la structure statorique amont (38),
dans laquelle le galet d'appui (96) du levier (80) d'au moins l'un des volets convergents (30) commandés est disposé axialement entre une paroi d'appui amont (90) et une paroi d'appui aval (92) qui sont rigidement solidaires de la partie mobile des moyens moteurs, de sorte que le galet d'appui (96) du levier soit libre de se mouvoir par rapport aux parois d'appui amont (90) et aval (92) au moins selon une direction radiale (R) par rapport à l'axe longitudinal (11), moyennant quoi :
- lors d'un déplacement vers l'aval de la partie mobile des moyens moteurs, la paroi d'appui amont (90) pousse le levier (80) vers l'aval et provoque ainsi un pivotement du volet convergent (30) selon le premier axe d'articulation (A1) correspondant, conduisant à rapprocher de l'axe longitudinal (11) une extrémité aval (46) du volet convergent, et
- lors d'un déplacement vers l'amont de la partie mobile des moyens moteurs, au moins si le turboréacteur est à l'arrêt, la paroi d'appui aval (92) pousse le levier (80) vers l'amont et provoque ainsi un pivotement du volet convergent (30) selon le premier axe d'articulation (A1) correspondant, conduisant à éloigner de l'axe longitudinal (11) l'extrémité aval (46) du volet convergent.

2. Partie arrière de turboréacteur selon la revendication 1, dans laquelle l'une des parois d'appui amont (90) et aval (92) est reliée à la partie mobile des moyens moteurs par l'intermédiaire de l'autre des parois d'appui amont et aval.

3. Partie arrière de turboréacteur selon la revendication 2, dans laquelle une paroi externe de liaison (98) relie entre elles des extrémités radialement externes respectives des parois d'appui amont (90) et aval (92).

4. Partie arrière de turboréacteur selon l'une quelconque des revendications 1 à 3, dans laquelle la paroi d'appui amont (90) disposée en regard du galet d'appui (96) de chaque levier (80) est espacée circonférentiellement de parois d'appui amont (90) disposées en regard des galets d'appui (96) des deux leviers (80) les plus proches, et la paroi d'appui aval (92) disposée en regard du galet d'appui (96) de chaque levier (80) est espacée circonférentiellement de parois d'appui aval (92) disposées en regard du galet d'appui (96) des deux leviers (80) les plus proches, moyennant quoi les parois d'appui amont (90) et aval (92) forment une rangée annulaire de dispositifs d'appui (100) comprenant chacun l'une des parois d'appui amont (90) et l'une des parois d'appui aval (92).

5. Partie arrière de turboréacteur selon la revendication 4, comprenant un anneau de synchronisation (82) entourant l'ensemble de volets convergents (30) ou la structure statorique amont (38), et par lequel chacun des dispositifs d'appui (100) est relié à la partie mobile des moyens moteurs.

6. Partie arrière de turboréacteur selon la revendication 4 ou 5, dans laquelle, pour chaque dispositif d'appui (100), une première paroi latérale de liaison (104) relie entre elles des premières extrémités circonférentielles respectives des parois d'appui amont (90) et aval (92), et une seconde paroi latérale de liaison (106) relie entre elles des secondes extrémités circonférentielles respectives des parois d'appui amont (90) et aval (92), opposées aux premières extrémités circonférentielles.

7. Partie arrière de turboréacteur selon l'une quelconque des revendications 1 à 6, dans laquelle la tuyère à géométrie variable comprend en outre un ensemble de volets divergents (32) répartis autour de l'axe longitudinal (11), comprenant des panneaux (33) destinés à canaliser le flux de gaz d'échappement (F4) au sein de la tuyère, et ayant des extrémités amont (44) articulées sur des extrémités aval (46) des volets convergents (30), moyennant quoi la tuyère est une tuyère convergente-divergente.

8. Turboréacteur pour aéronef, comprenant une partie arrière selon l'une quelconque des revendications 1 à 7.

## Patentansprüche

1. Heckteil eines Turboreaktors, umfassend:
- eine vorgeschaltete Statorstruktur (38);
- eine Düse mit variabler Geometrie (28), die eine Baugruppe konvergenter Klappen (30) umfasst, die um eine Längsachse (11) des Heckteils des Turboreaktors verteilt sind, die jeweils eine Platte (31) umfasst, die dazu bestimmt ist, einen Abgasstrom (F4) innerhalb der Düse zu leiten, und die jeweils ein vorgelagertes Ende (36) aufweist, das auf der vorgelagerten Statorstruktur entlang einer entsprechenden ersten Gelenkachse (A1) gelenkt wird; wobei mindestens einige der konvergenten Klappen (30), die konvergenten gesteuerten Klappen, jeweils einen Hebel (80) umfassen, der fest mit der entsprechenden Platte (31) verbunden ist und sich in einer Richtung von der Längsachse (11) weg erstreckt, wobei der Hebel (80) eine Stützrolle (96) trägt, die frei drehbar auf dem Hebel entlang einer Achse (94) parallel zu der ersten entsprechenden Gelenkachse (A1) montiert ist;
- motorische Mittel, die einen axial beweglichen Teil umfassen, der auf Befehl in Bezug auf die vorgeschaltete Statorstruktur (38) beweglich ist,
wobei die Stützrolle (96) des Hebels (80) mindestens eine der konvergenten gesteuerten Klappen (30) axial zwischen einer vorgelagerten Stützwand (90) und einer nachgelagerten Stützwand (92) angeordnet ist, die fest mit dem beweglichen Teil der motorischen Mittel verbunden sind, so dass die Stützrolle (96) des Hebels sich relativ zu den vorgelagerten (90) und nachgelagerten Stützwänden (92) mindestens in einer radialen Richtung (R) in Bezug auf die Längsachse (11) frei bewegen kann, wobei:
- bei einer Bewegung des beweglichen Teils der motorischen Mittel nach hinten, die vorgelagerte Stützwand (90) den Hebel (80) nach hinten drückt und so eine Schwenkung der konvergenten Klappe (30) gemäß der entsprechenden ersten Gelenkachse (A1) bewirkt, was dazu führt, dass sich ein nachgelagertes Ende (46) der konvergenten Klappe der Längsachse (11) nähert, und
- bei einer Bewegung des beweglichen Teils der motorischen Mittel nach vorne, mindestens wenn der Turboreaktor stillsteht, drückt die nachgelagerte Stützwand (92) den Hebel (80) nach vorne und bewirkt so eine Schwenkung der konvergenten Klappe (30) gemäß der entsprechenden ersten Gelenkachse (A1), was dazu führt, dass das nachgelagerte Ende (46) der konvergenten Klappe von der Längsachse (11) wegbewegt wird.

2. Heckteil eines Turboreaktors nach Anspruch 1, wobei eine der vor- (90) und nachgelagerten Stützwände (92) über die andere der vor- und nachgelagerten Stützwände mit dem beweglichen Teil der motorischen Mittel verbunden ist.

3. Heckteil eines Turboreaktors nach Anspruch 2, wobei eine äußere Verbindungswand (98) die jeweiligen radialen äußeren Enden der vorgelagerten (90) und nachgelagerten Stützwände (92) miteinander verbindet.

4. Heckteil des Turboreaktors nach einem der Ansprüche 1 bis 3, wobei die gegenüber der Stützrolle (96) jedes Hebels (80) angeordnete vorgelagerte Stützwand (90) umlaufend von gegenüber den Stützrollen (96) der beiden nächstgelegenen Hebel (80) angeordneten vorgelagerten Stützwänden (90) beabstandet ist, und die gegenüber der Stützrolle (96) jedes Hebels (80) angeordnete nachgelagerte Stützwand (92) umlaufend von nachgelagerten Stützwänden (92) gegenüber der Stützrolle (96) der beiden nächstgelegenen Hebel (80) beabstandet angeordnet ist, wodurch die vorgelagerten (90) und nachgelagerten Stützwände (92) eine ringförmige Reihe von Stützvorrichtungen (100) bilden, die jeweils eine der vorgelagerten (90) und eine der nachgelagerten Stützwände (92) umfassen.

5. Heckteil eines Turboreaktors nach Anspruch 4, umfassend einen Synchronring (82), der die Baugruppe konvergenter Klappen (30) oder die vorgelagerte Statorstruktur (38) umgibt, und durch den jede der Stützvorrichtungen (100) mit dem beweglichen Teil der motorischen Mittel verbunden ist.

6. Heckteil eines Turboreaktors nach Anspruch 4 oder 5, wobei für jede Stützvorrichtung (100) eine erste Verbindungsseitenwand (104) jeweils erste Umfangsenden der vorgelagerten (90) und nachgelagerten Stützwände (92) miteinander verbindet, und eine zweite Verbindungsseitenwand (106) jeweils zweite Umfangsenden der vorgelagerten (90) und nachgelagerten Stützwände (92) miteinander verbindet, die den ersten Umfangsenden gegenüberliegen.

7. Heckteil eines Turboreaktors nach einem der Ansprüche 1 bis 6, wobei die Düse mit variabler Geometrie ferner eine Reihe von um die Längsachse (11) verteilten divergenten Klappen (32) umfasst, die Platten (33) umfassen, die dazu bestimmt sind, den Abgasstrom (F4) innerhalb der Düse zu leiten, und die vorgelagerte Enden (44) aufweist, die auf nachgelagerten Enden (46) der konvergenten Klappen (30) gelenkt werden, wodurch die Düse eine konvergentedivergente Düse ist.

8. Turboreaktor für eine Flugzeug, umfassend ein Heckteil nach einem der Ansprüche 1 bis 7.

## Claims

1. A rear part of a turbojet engine, comprising:
- an upstream stator structure (38);
- a variable-geometry nozzle (28) comprising a set of convergent flaps (30) distributed about a longitudinal axis (11) of the rear part of the turbojet engine, each comprising a panel (31) intended to channel an exhaust gas flow (F4) within the nozzle, and each having an upstream end (36) hinged on the upstream stator structure along a corresponding first hinge axis (A1); wherein at least some of the convergent flaps (30), referred to as controlled convergent flaps, each comprise a lever (80) rigidly secured to the corresponding panel (31) and extending in a direction away from the longitudinal axis (11), said lever (80) carrying a bearing roller (96) mounted free to rotate on the lever along an axis (94) parallel to the corresponding first pivot axis (A1);
- drive means comprising a movable part capable of moving axially on command with respect to the upstream stator structure (38),
wherein the bearing roller (96) of the lever (80) of at least one of the controlled convergent flaps (30) is arranged axially between an upstream bearing wall (90) and a downstream bearing wall (92) which are rigidly secured to the movable part of the drive means, such that the bearing roller (96) of the lever is free to move with respect to the upstream (90) and downstream (92) bearing walls at least along a radial direction (R) with respect to the longitudinal axis (11), whereby:
- during a downstream movement of the movable part of the drive means, the upstream bearing wall (90) pushes the lever (80) downstream and thus triggers pivoting of the convergent flap (30) along the corresponding first hinge axis (A1), moving a downstream end (46) of the convergent flap towards to the longitudinal axis (11), and
- during an upstream movement of the movable part of the drive means, at least if the turbojet engine is off, the downstream bearing wall (92) pushes the lever (80) upstream and thus triggers pivoting of the convergent flap (30) along the corresponding first hinge axis (A1), moving the downstream end (46) of the convergent flap away from the longitudinal axis (11).

2. The rear part of a turbojet engine according to claim 1, wherein one of the upstream (90) and downstream (92) bearing walls is connected to the movable part of the drive means via the other of the upstream and downstream bearing walls.

3. The rear part of a turbojet engine according to claim 2, wherein an outer connecting wall (98) interconnects respective radially outer ends of the upstream (90) and downstream (92) bearing walls.

4. The rear part of a turbojet engine according to any one of claims 1 to 3, wherein the upstream bearing wall (90) disposed facing the bearing roller (96) of each lever (80) is circumferentially spaced apart from upstream bearing walls (90) disposed facing the bearing rollers (96) of the two closest levers (80), and the downstream bearing wall (92) disposed facing the bearing roller (96) of each lever (80) is circumferentially spaced apart from downstream bearing walls (92) disposed facing the bearing roller (96) of the two closest levers (80), whereby the upstream (90) and downstream (92) bearing walls form an annular row of bearing devices (100) each comprising one of the upstream bearing walls (90) and one of the downstream bearing walls (92).

5. The rear part of a turbojet engine according to claim 4, comprising a synchroniser ring (82) surrounding the set of convergent flaps (30) or the upstream stator structure (38), and whereby each of the bearing devices (100) is connected to the movable part of the drive means.

6. The rear part of a turbojet engine according to claim 4 or 5, wherein, for each bearing device (100), a first lateral connecting wall (104) interconnects respective first circumferential ends of the upstream (90) and downstream (92) bearing walls, and a second lateral connecting wall (106) interconnects respective second circumferential ends of the upstream (90) and downstream (92) bearing walls, opposite the first circumferential ends.

7. The rear part of a turbojet engine according to any one of claims 1 to 6, wherein the variable-geometry nozzle further comprises a set of divergent flaps (32) distributed about the longitudinal axis (11), comprising panels (33) intended to channel the exhaust gas flow (F4) within the nozzle, and having upstream ends (44) hinged on downstream ends (46) of the convergent flaps (30), whereby the nozzle is a convergent-divergent nozzle.

8. An aircraft turbojet engine, comprising a rear part according to any one of claims 1 to 7.
